Europäisches Patentamt

European Patent Office

Office européen des brevets

(19)

(11) **EP 0 962 250 A1**

(12) **DEMANDE DE BREVET EUROPEEN**

(43) Date de publication:
08.12.1999 Bulletin 1999/49

(51) Int Cl.⁶: **B01J 29/03**, C10G 47/12

(21) Numéro de dépôt: 99401061.9

(22) Date de dépôt: 30.04.1999

(84) Etats contractants désignés:
AT BE CH CY DE DK ES FI FR GB GR IE IT LI LU
MC NL PT SE
Etats d'extension désignés:
AL LT LV MK RO SI

(30) Priorité: 13.05.1998 FR 9806006

(71) Demandeur: INSTITUT FRANCAIS DU PETROLE
92852 Rueil-Malmaison Cedex (FR)

(72) Inventeurs:
• Benazzi, Eric
78400 Chatou (FR)

• Kasztelan, Slavik
92500 Rueil Malmaison (FR)
• George-Marchal, Nathalie
69230 Saint Genis Laval (FR)

(74) Mandataire: **Andréeff, François et al**
**Département Brevets,**
**Institut Français du Petrole,**
**1 & 4 avenue de Bois-Préau**
**92852 Rueil Malmaison (FR)**

(54) **Catalyseur comprenant un phyllosilicate contenant du bore et/ou du silicium et procédé d'hydrocraquage**

(57)    L'invention concerne un catalyseur renfermant au moins une matrice, au moins un phyllosilicate 2:1 dioctaédrique éventuellement synthétisé en milieu fluoré et éventuellement ponté, au moins un métal choisi parmi les éléments du groupe VIB et/ou du groupe VIII de la classification périodique, du bore et/ou du silicium, éventuellement du phosphore, éventuellement au moins un élément du groupe VIIA, et éventuellement au moins un élément du groupe VIIB. L'invention concerne également l'utilisation de ce catalyseur en hydrocraquage des charges hydrocarbonées.

**Description**

La présente invention concerne un catalyseur comprenant au moins un métal choisi parmi le groupe VIB et/ou le groupe VIII (groupe 6 et groupes 8, 9 et 10 selon la nouvelle notation de la classification périodique des éléments : Handbook of Chemistry and Physics, 76$^{ième}$ édition, 1995-1996, intérieur 1ère page de couverture), associé à un support comprenant au moins une matrice poreuse amorphe ou mal cristallisée de type oxyde et au moins une argile choisie dans le groupe formé par les phyllosilicate 2:1 dioctaédrique et les phyllosilicate 2:1 trioctaédriques. Le support du catalyseur renferme au moins un métal promoteur qui est du bore et/ou du silicium, éventuellement du phosphore, et éventuellement au moins un élément du groupe VIIA (groupe 17 des halogènes) et notamment le fluor, et éventuellement au moins un élément du groupe VIIB.

La présente invention concerne également les procédés de préparation dudit catalyseur, ainsi que son utilisation pour l'hydrocraquage de charge hydrocarbonées telles que les coupes pétrolières et les coupes issues du charbon. Les dites charges hydrocarbonées contenant des composés aromatiques, et/ou oléfiniques, et/ou naphténiques, et/ou paraffiniques, les dites charges contenant éventuellement des métaux, et/ou de l'azote, et/ou de l'oxygène et/ou du soufre.

L'hydrocraquage prend une importance de plus en plus grande dans la pratique du raffinage avec la nécessité croissante de convertir des fractions lourdes en fractions plus légères valorisables en tant que carburants. Ceci résulte de la demande croissante en carburants. Cette valorisation implique une réduction relativement importante du poids moléculaire des constituants lourds, qui peut être obtenue par exemple au moyen de réactions de craquage.

Le procédé d'hydrocraquage catalytique met en oeuvre des catalyseurs contenant d'une part une fonction hydrogénante, désulfurante et déazotante apportée par la phase active à base de métaux de transition et d'autre part une fonction acide, en général apportée par la matrice amorphe ou une zéolithe ou encore leur mélange. Un catalyseur d'hydrocraquage présentant une activité et une sélectivité améliorées sera constitué d'une fonction hydrogénante et d'une fonction acide bien ajustées. L'hydrocraquage est employé pour traiter des charges telles que les gazoles sous vide, les résidus atmosphériques ou sous vide, désasphaltés ou non. L'hydrocraquage permet d'obtenir des coupes plus légères fortement purifiées c'est à dire à faible teneur en soufre, azote et métaux.

Il est donc important d'augmenter l'activité et la sélectivité des catalyseurs d'hydrocraquage. L'un des moyens consiste à acidifier la matrice sans empoisonner l'activité de la phase hydrogénante à base de métaux de transition ni l'activité craquante de la phase acide.

L'invention concerne donc un catalyseur d'hydrocraquage de charges hydrocarbonées. Le catalyseur contient au moins un métal choisi dans le groupe VIB et le groupe VIII de la classification périodique des éléments. Le catalyseur renferme aussi au moins une argile choisie dans le groupe formé par les phyllosilicate 2:1 dioctaédriques et les phyllosilicates 2:1 trioctaédriques tels que la kaolinite, l'antigorite, la chrysotile, la montmorillonite, la beidellite, la vermiculite, le talc, l'hecto rite , la saponite, la laponite. De préférence, le catalyseur contient un phyllosilicate 2:1 dioctaédrique synthétisé en milieu fluorure éventuellement ponté, ledit phyllosilicate présentant de préférence une grande distance réticulaire . Le catalyseur comprend également au moins une matrice amorphe ou mal cristallisée servant de liant. Le catalyseur est caractérisé en ce qu'il renferme en outre du bore et/ou du silicium, éventuellement du phosphore, éventuellement au moins un élément du groupe VIIA, de préférence le fluor, et éventuellement au moins un élément du groupe VIIB, par exemple le manganèse, le technétium et le rhénium.

Ledit catalyseur présente une activité et une sélectivité en hydrocraquage plus importante que les formules catalytiques à base d'argile connues dans l'art antérieur. Sans vouloir être lié par une quelconque théorie, il semble que cette activité particulièrement élevée des catalyseurs de la présente invention est due aux renforcement de l'acidité du catalyseur par la présence de bore et/ou de silicium, en particulier sur la matrice ce qui induit une amélioration des propriétés en hydrocraquage par rapport aux catalyseurs utilisés habituellement.

La présente invention concerne plus précisément un catalyseur comprenant au moins un phyllosilicate 2:1 dioctaédrique, éventuellement ponté. Dans le cas où ce dernier est ponté, sa distance réticulaire est au moins égale à 2,0 x 10$^{-9}$ m et comprend des piliers à base d'au moins un des composés choisi dans le groupe formé par SiO$_2$, Al$_2$O$_3$, TiO$_2$, ZrO$_2$ et V$_2$O$_5$ ou toute combinaison de ces derniers.

Selon la présente invention, les phyllosilicates 2:1 dioctaédriques (de préférence, préalablement préparés en milieu fluorure en présence de l'acide HF et/ou d'une autre source d'anions fluorures), présentent de préférence une distance réticulaire d$_{001}$ au moins égale à 2,0 x 10$^{-9}$ m, de manière préférée au moins égale 2,65 x 10$^{-9}$ m et de manière encore plus préférée supérieure à 2,8 x 10$^{-9}$ m ou encore au moins égale à 3,3 x 10$^{-9}$ m et généralement inférieure ou égale à 6,0 x 10$^{-9}$, de préférence à 5,0 x 10$^{-9}$ m. La distance réticulaire, représentée par d$_{001}$, représente la somme de l'épaisseur d'un feuillet et de l'espacement interfoliaire. Cette valeur est directement accessible par la méthode classique de diffraction des rayons X sur poudre orientée.

Les phyllosilicates 2:1 dioctaédriques sont des minéraux qui résultent de l'empilement de feuillets élèmentaires. Bien que les liaisons chimiques entre les éléments de la structure des phyllosilicates soient ionocovalentes, elles seront supposées ioniques, afin de simplifier la description.

A partir d'une représentation où les ions $O^{2-}$ sont dans un plan au contact les uns des autres, il est possible d'obtenir un plan représentant une cavité hexagonale, dit plan hexagonal, en retirant dans une rangée sur deux d'ions $O^{2-}$, un ion $O^{2-}$ sur deux.

La structure d'un phyllosilicates 2:1 dioctaédriques peut être représentée simplement à partir d'arrangements de plans hexagonaux d'ions $O^{2-}$ et de plans compacts d'ions $O^{2-}$ et $OH^-$. Les ions $OH^-$ remplissent les cavités des plans hexagonaux d'ions $O^{2-}$

La superposition de deux plans compacts encadrés de part et d'autre par un plan hexagonal permet de définir une couche octaédrique (O) entre deux couches tétraédriques (T) d'où la dénomination de feuillets TOT.

Un tel arrangement, aussi dénommé 2:1, permet de définir un plan de cavités octaédriques situé dans la couche octaédrique entre deux plans de cavités tétraédriques, un dans chaque couche tétraédrique. Chaque tétraèdre a un ion $O^{2-}$ commun avec la couche octaédrique et chacun des trois autres ions $O^{2-}$ est partagé avec un autre tétraèdre de la même couche tétraédrique.

La maille cristalline est ainsi constituée de 6 cavités octaédriques ayant de part et d'autre 4 cavités tétraédriques. Un tel arrangement correspond dans le cas d'une phyllite constituée des éléments Si, Al, O, H à la formule idéale $Si_8$ $(Al_4 \square_2)O_{20}$ $(OH)_4$. Les cavités tétraédriques contiennent l'élément silicium , les cavités octaédriques contiennent l'élément aluminium mais dans ce cas une cavité octaédrique sur 3 est vide ($\square$). Un tel ensemble est électriquement neutre. On utilise souvent la demi-maille, qui a pour formule :

$$Si_4 \ (Al_2\square)O_{10} \ (OH)_2$$

L'élément silicium tétraédrique peut être substitué par des éléments trivalents tels que par exemple l'aluminium, le gallium ou le fer ($Fe^{3+}$). De même, l'élément aluminium octaédrique peut être substitué par:

- les éléments trivalents cités précédemment, ou un mélange de ces éléments,
- des éléments divalents tel que, par exemple, le magnésium.

Ces substitutions confèrent des charges négatives à l'édifice. Celles-ci entraînent l'existence de cations de compensation échangeables situés dans l'espace interfoliaire. L'épaisseur de l'espace interfoliaire dépend de la nature des cations de compensation et de leur état d'hydratation. Cet espace est d'ailleurs capable d'accueillir d'autres espèces chimiques comme de l'eau, des amines, des sels, des alcools, des bases.

L'existence de groupes -OH entraîne une instabilité thermique due à la réaction de déshydroxylation d'équation : $2 \ \text{-OH} \longrightarrow \text{-O-} + H_2O$.

A cet égard et sans être lié à une quelconque théorie, on peut penser que l'introduction, lors de la synthèse, de l'élément fluor dans la structure en place des groupes O-H conduit à des phyllosilicates de stabilité thermique nettement améliorée.

Les phyllosilicates préférés sont des phyllosilicates 2:1 dioctaédriques dont les caractéristiques sont données ci-après, dans lesquels des piliers ont été introduits dans l'espace interfoliaire, les piliers étant choisis parmi $SiO_2$, $Al_2O_3$, $TiO_2$, $ZrO_2$, $V_2O_5$, de façon à atteindre une distance réticulaire $d_{001}$ d'au moins $2,0 \ x10^{-9}$ m.

La formule chimique générale (pour une demi-maille) des phyllosilicates 2:1 dioctaédriques, de préférence synthétisés en milieu fluorure en présence de l'acide HF et/ou d'une autre source d'anions fluorure, avant pontage est la suivante :

$$M^{m+}_{x/m} \ ((Si_{(4-x)}T_x)(T_2\square_1)O_{10}(OH)_{(2-y)}F_y)^{x-}$$

où

- T représente un élèment choisi dans l'ensemble formé par les éléments du groupe IIIA (tels que par exemple B, Al, Ga) et le fer,
- M est au moins un cation de compensation choisi dans le groupe formé par les cations des éléments des groupes IA, IIA et VIII, les cations organiques contenant de l'azote, le cation ammonium, les cations des terres rares. Ce cation provient du milieu réactionnel ou est introduit par au moins un procédé d'échange. Avantageusement, lorsque le cation provient du milieu réactionnel, il est choisi dans le groupe formé par les alcalins (excepté le lithium), le cation ammonium ($NH_4^+$), les cations organiques contenant de l'azote (parmi lesquels les alkylammonium et les arylammonium) et les cations organiques contenant du phosphore (parmi lesquels les alkylphosphonium et les arylphosphonium). Lorsque M est un cation de compensation introduit par échange ionique post-synthèse, il est choisi dans le groupe formé par les cations des élèments des groupes IA, IIA et VIII de la classification périodique des élèments, les cations des terres rares (cations d'éléments de numéro atomique de 57 à 71 inclus), les cations organiques contenant de l'azote (parmi lesquels les alkylammonium et les arylammonium) et le cation ammonium.

- m est le nombre de valence du cation M,
- x est un nombre compris entre 0 et 2 et de préférence 0,1 et 0,8,
- y un nombre compris entre 0 et 2 si le phyllosilicate contient du fluor, y est supérieur à 0,
- □ représente une cavité octaédrique.

Le diagramme de diffraction des rayons X de phyllosilicate 2:1 dioctaédrique avant pontage est caractérisé par la présence des raies suivantes :

- une raie caractérisant la $d_{060}$ égale à $1,49 \pm 0,01$ x $10^{-10}$ m dans le cas où le phyllosilicate dioctaédrique 2:1 comporte une couche octaédrique dont la composition est la suivante ($Al_2\square$),

- au moins une réflexion 001 telle que $d_{001}$ soit égal $1,25 \pm 0,3$ x $10^{-9}$ m suivant la nature du cation de compensation et son état d'hydratation à l'humidité considérée.

De préférence la teneur en fluor est telle que le rapport molaire F/Si soit compris entre 0,1 et 4 et de préférence 0,1 et 2.

Le phyllosilicate 2:1 dioctaédrique présente de plus, au moins un signal RMN à rotation à l'angle magique du $^{19}F$, déterminé et bien connu par l'homme de l'art. Le déplacement chimique de ce signal dépend aussi de la composition de la couche octaédrique. Ainsi le signal correspond à une valeur de ;

- 133 ppm ($\pm$ 5 ppm) en RMN à rotation à l'angle magique du $^{19}F$, dans le cas où le F a pour premiers voisins deux atomes d'aluminium, ce qui correspond à une couche octaédrique dont la composition est ($Al_2\square$)
- 108 ppm ($\pm$ 5 ppm) en RMN à rotation à l'angle magique du $^{19}F$, dans le cas où le F a pour premiers voisins deux atomes de gallium, ce qui correspond à une couche octaédrique dont la composition est ($Ga_2\square$),
- 118 ppm ($\pm$ 5 ppm) en RMN à rotation à l'angle magique du $^{19}F$, dans le cas où le F a pour premiers voisins un atome d'aluminium et un atome de gallium, ce qui correspond à une couche octaédrique dont la composition est la suivante (Ga,Al). Lesdits phyllosilicates peuvent avantageusement être synthétisés en milieu fluorure en présence de l'acide HF et/ou d'une autre source d'anions fluorures et à un pH inférieur à 9, et de préférence compris entre 0,5 et 6,5.

La préparation de ce type de solides en milieu fluorure et leur caractérisation sont décrites dans les références ci-après dont l'enseignement est inclus dans la présente description : le brevet FR-A-2673930, une publication à la 202ème réunion de l'American Chemical Society (ACS) de New-York en août 1991 dont le contenu a été publié dans Synthesis of Microporous Materials, Extended clays and other Microporous Solids (1992), un compte rendu de l'Académie des Sciences, Paris , t. 315, Série II, p. 545-549, 1992.

Les phyllosilicates 2:1 dioctaédriques décrits ci-dessus, pouvant avantageusement contenir du fluor sont pontés par exemple par un nouveau procédé comprenant les étapes suivantes :

- le phyllosilicate 2:1 dioctaédrique, de préférence sous sa forme ammonium ($NH_4^+$), est mis en suspension dans une solution d'un agent tensio-actif dont la concentration varie entre 0,01 mole/litre et 1 mole/litre de préférence entre 0,05 et 0,7 mole/litre. Les agents tensio-actifs utilisables dans cette étape, sont de nature anionique, tels que à titre d'exemples non limitatifs les alkylsulfates et les alkylsulfonates, ou de nature cationique parmi lesquels on peut citer les halogénures ou hydroxydes de tétralkylammonium tels que le chlorure de cétyltriméthylammonium ou bien encore des alkylammoniums géminés. A titre d'exemple, sont utilisables le bromure d'hexadecyltriméthylammonium, le bromure d'éthylhexadecyldimethylammonium, le bromure d'octadecyltriméthyl ammonium, le bromure de dodecyltrimethylammonium, le bromure de didodecyldimethylammonium. On peut également employer des tensio-actifs autres, tels que le triton X-100, le polyéthylène-oxyde (POE).

- Après un temps de contact, durant lequel le milieu est agité, par exemple compris entre 5 minutes et 12 heures et de préférence entre 15 minutes et 6 heures et de manière encore plus préférée entre 15 minutes et 3 heures, l'ensemble est filtré puis lavé à l'eau distillée puis enfin séché sous air ou gaz inerte par exemple à une température comprise entre 40 et 150°C; pour une durée comprise entre 5 minutes et 24 heures et de préférence entre 30 minutes et 12 heures. Dans le cas où le phyllosilicate n'est pas sous forme ammonium, il pourra subir préalablement tout traitement connu de l'homme de l'art de manière à obtenir le phyllosilicate 2:1 dioctaédrique majoritairement sous sa forme ammonium. On peut citer à titre d'exemple, non limitatif, de traitement pour réaliser cette transformation les échanges ioniques par des solutions aqueuses d'un sel d'ammonium (nitrate d'ammonium et/ou chlorure d'ammonium ).

- le phyllosilicate 2:1 dioctaédrique traité selon le mode opératoire décrit dans l'étape précédente est ensuite mis au contact d'un mélange comprenant :

  au moins une amine primaire du type $RNH_2$ ou d'une amine secondaire R'RNH, où R et R' sont choisis avantageusement dans l'ensemble formé par les groupements carbonés, alkyles, iso-alkyles, napthényles, aromatiques substitués ou non par d'autres groupements et pouvant contenir de 1 à 16 atomes de carbone,
  au moins un alkoxyde d'un élément ou un mélange d'alkoxydes, l'élément étant choisi dans l'ensemble formé par le silicium, l'aluminium, le zirconium, le titane, le vanadium, de formule générale M(OR)n, où M est l'élément décrit ci-dessus, n le degré de valence dudit élément et R un groupement choisi avantageusement dans l'ensemble formé par les groupes alkyles, iso-alkyles, napthényles et aromatiques substitués ou non. Les groupes -OR peuvent être identiques ou différents selon la nature du groupe R choisi dans l'ensemble défini ci-dessus.
  L'ensemble est laissé en contact, de préférence sous agitation pendant une durée comprise entre 5 minutes et 12 heures et de préférence entre 5 minutes et 8 heures.
  le phyllosilicate 2:1 dioctaédrique ainsi ponté est ensuite filtré puis séché sous air ou sous gaz inerte, par exemple à une température comprise entre 40 et 150°C, pour une durée comprise entre 5 minutes et 24 heures et de préférence entre 30 minutes et 12 heures.

Ce procédé de pontage permet d'introduire simplement et rapidement des piliers $SiO_2$, $Al_2O_3$, $TiO_2$, $ZrO_2$, $V_2O_5$ ou un mélange de ces piliers dans l'espace interfoliaire des phyllosilicates 2:1 dioctaédriques avantageusement préparés en milieu fluorure.

Par rapport au phyllosilicate 2:1 dioctaédrique de base, le phyllosilicate ponté présente un spectre de diffraction des rayons X, qui permet d'évaluer la distance réticulaire $d_{001}$ qui a donc nettement augmenté à la valeur d'au moins $2,0 \times 10^{-10}$m. On observe également que la surface spécifique a augmenté, elle se situe alors généralement entre 200 et 1000 $m^2$/g et de préférence entre 250 et 700 $m^2$/g. Les raies $d_{060}$ en spectre RX et les raies RMN à rotation à l'angle magique du $^{19}F$ sont conservées.

Le catalyseur selon la présente invention renferme donc également au moins une matrice minérale poreuse amorphe ou mal cristallisée de type oxyde. On peut citer à titre d' exemple non limitatif les alumines, les silices, les silice-alumines. On peut choisir également les aluminates. On préfère utiliser des matrices contenant de l'alumine, sous toutes ces formes connues de l'homme du métier, et de manière encore plus préférée les alumines, par exemple l'alumine gamma.

Le catalyseur renferme en outre une fonction hydrogénante. La fonction hydrogénante telle qu'elle a été définie précédemment, c'est à dire au moins un métal choisi dans le groupe VIB et/ou le groupe VIII, peut être introduite dans le catalyseur à divers niveaux de la préparation et de diverses manières.

Le catalyseur est aussi caractérisé en ce qu'il renferme un élément promoteur tel que du bore ou du silicium et éventuellement, du phosphore. Il contient éventuellement au moins un élément du groupe VIIA, de préférence le fluor, et éventuellement au moins un élément du groupe VIIB.

Le catalyseur de la présente invention renferme généralement en % poids par rapport à la masse totale du catalyseur :

- 0,1 à 60%, de préférence de 0,1 à 50% et de manière encore plus préférée de 0,1 à 40% d'au moins un métal choisi parmi le groupe VIB et le groupe VIII (les % étant exprimés en % oxydés),
- 0,1 à 99%, de préférence de 1 à 99% d'au moins une matrice minérale poreuse amorphe ou mal cristallisée (génerallement de type oxyde),
- 0,1 à 90%, de préférence de 0,1 à 80% et de manière encore plus préférée de 0,1 à 70% d'au moins un phyllosilicate 2:1 dioctaédrique, de préférence synthétisé en milieu fluorure, éventuellement ponté, ledit phyllosilicate lorsqu'il est ponté présente de préférence une grande distance réticulaire, d'au moins $2,0 \times 10^{-10}$m,

ledit catalyseur renferme en outre,

- 0,1 à 20%, de préférence de 0,1 à 15% et de manière encore plus préférée de 0,1 à 10% de bore (les % étant exprimés en % oxydés), et/ou de silicium qui est sous forme amorphe, qui a été déposé sur le support et principalement localisé sur la matrice du support (les % étant exprimés en % oxydés),

et éventuellement,

- 0 à 20%, de préférence de 0,1 à 15% et de manière encore plus préférée de 0,1 à 10% de phosphore (les % étant exprimés en % oxydés),
- 0 à 20%, de préférence de 0,1 à 15% et de manière encore plus préférée de 0,1 à 10% d'au moins un élément choisi dans le groupe VIIA (halogènes), de préférence le fluor
- 0 à 20%, de préférence de 0,1 à 15% et de manière encore plus préférée de 0,1 à 10% d'au moins un élément choisi dans le groupe VIIB (les % étant exprimés en % oxydés),

Les métaux du groupe VIB, du groupe VIII et du groupe VIIB du catalyseur de la présente invention peuvent être présent en totalité ou partiellement sous la forme métallique et/ou oxyde et/ou sulfure.

Les catalyseurs selon l'invention peuvent être préparés par toutes méthodes adéquates. Généralement on prépare un support comprenant une matrice poreuse choisie dans le groupe formé par les matrices amorphes ou mal cristallisée, au moins une argile choisie dans le groupe formé par les phyllosilicates 2:1 dioctaédriques et les phyllosilicates 2:1 trioctaédriques, sur lequel on dépose au moins métal choisi dans le groupe formé par le groupe VIB et le groupe VIII puis on imprègne ce support par au moins une solution choisie parmi les solutions aqueuses de bore et de silicium. D'une façon préférée, le silicium et le bore sont introduits sur le catalyseur contenant déjà le support et au moins un métal choisi dans le groupe formé par les éléments des groupes VIII et VIIB et éventuellement le groupe VIIB.

D'une façon préférée, un catalyseur, par exemple un catalyseur conventionnel d'hydrocraquage, de type NiMo ou NiMoP contenant un support comprenant un mélange d'alumine et au moins un phyllosilicate 2:1 dioctaédrique, de préférence synthétisé en milieu fluorure puis ponté, ledit phyllosilicate présentant une grande distance réticulaire, est imprégné par une solution aqueuse de bore puis une solution aqueuse de silicium (ou l'inverse solution de silicium puis de bore) ou est imprégnée par une solution aqueuse commune de bore et de silicium.

L'élément promoteur et, en particulier le silicium introduit sur le support selon l'invention, est principalement localisé sur la matrice du support et peut être caractérisé par des techniques telles que la microsonde de Castaing (profil de répartition des divers éléments), la microscopie électronique par transmission couplée à une analyse X des composants du catalyseur, ou bien encore par l'établissement une cartographie de répartition des éléments présents dans le catalyseur par microsonde électronique. Ces analyses locales vont fournir la localisation des divers éléments, en particulier la localisation de l'élément promoteur, notamment la localisation de la silice amorphe due à l'introduction du silicium sur la matrice du support. La localisation du silicium dans la charpente de la zéolithe contenue dans le support est aussi révélée. Par ailleurs, une estimation quantitative des teneurs locales en silicium et autres éléments peut-être effectuée.

D'autre part, la RMN du solide du $^{29}$Si à rotation à l'angle magique est une technique qui permet de détecter la présence de silice amorphe introduite dans le catalyseur selon le mode opératoire décrit dans la présente invention.

L'invention concerne aussi un procédé de préparation dudit catalyseur. De façon plus particulière, le procédé de préparation du catalyseur de la présente invention comprend les étapes suivantes :

a) on sèche et on pèse un solide ci-après dénommé le précurseur, renfermant au moins les composés suivants : une matrice poreuse amorphe et/ou mal cristallisée, au moins une argile choisie dans le groupe formé par les phyllosilicate 2:1 dioctaédrique et les phyllosilicate 2:1 trioctaédriques, de préférence un phyllosilicate 2:1 dioctaédrique, de préférence synthétisé en milieu fluorure éventuellement ponté, ledit phyllosilicate présentant une grande distance réticulaire, au moins un élément du groupe VIB, et/ou au moins un élément du groupe VIII, éventuellement du phosphore, le tout étant de préférence mis en forme,

b) on imprègne le solide précurseur défini à l'étape a), par une solution aqueuse contenant du bore et/ou du silicium, éventuellement du phosphore et éventuellement au moins un élément du groupe VIIA, de préférence F,

c) on laisse reposer le solide humide sous une atmosphère humide à une température comprise entre 10 et 80°C,

d) on sèche le solide humide obtenu à l'étape b) à une température comprise entre 60 et 150°C,

e) on calcine le solide obtenu à l'étape c) à une température comprise entre 150 et 800°C.

L'étape b) ci-dessus peut être réalisée selon les méthodes classiques de l'homme du métier.

Une méthode préférée selon l'invention consiste à préparer une solution aqueuse d'au moins un sel de bore tel que le biborate d'ammonium ou le pentaborate d'ammonium en milieu alcalin et en présence d'eau oxygénée et d'introduire dans la solution un composé du silicium de type silicone et à procéder à une imprégnation dite à sec, dans laquelle on remplit le volume des pores du précurseur par la solution contenant le B et le Si. Cette méthode permet d'obtenir une meilleure répartition des dépôts du bore et du silicium que la méthode conventionnelle employant une solution alcoolique d'acide borique ou une solution d'orthosilicate d'éthyle dans l'alcool.

Le bore et silicium, éventuellement le phosphore, et éventuellement l'élément choisi dans le groupe VIIA des ions halogénures, de préférence fluor, peuvent être introduits dans le catalyseur à divers niveaux de la préparation et de diverses manières.

L'imprégnation de la matrice est de préférence effectuée par la méthode d'imprégnation dite "à sec" bien connue de l'homme du métier. L'imprégnation peut être effectuée en une seule étape par une solution contenant l'ensemble des éléments constitutifs du catalyseur final.

Le bore, le silicium et éventuellement le phosphore et éventuellement l'élément choisi parmi les ions halogénures du groupe VIIA, peuvent être introduits par une ou plusieurs opérations d'imprégnation avec excès de solution sur le précurseur calciné.

Ainsi par exemple, dans le cas préféré où le précurseur est un catalyseur de type nickel-molybdène supporté sur un support formé d'alumine et d'au moins un phyllosilicate 2:1 dioctaédrique, de préférence synthétisé en milieu fluorure (en présence de l'acide fluorhydrique et/ou d'une autre source d'anions fluorure) éventuellement ponté, ledit phyllosilicate présentant une grande distance réticulaire, il est possible d'imprégner ce précurseur par une solution aqueuse de biborate d'ammonium et de silicone Rhodorsil E1P de la société Rhône Poulenc de procéder à un séchage par exemple à 80°C, puis d'imprégner par une solution de fluorure d'ammonium, de procéder à un séchage par exemple à 80°C, et de procéder à une calcination qui peut être réalisée de façon préférée sous air en lit traversé, par exemple à 500°C pendant 4 heures.

D'autres séquences d'imprégnation peuvent être mise en oeuvre pour obtenir le catalyseur de la présente invention.

Ainsi, il est possible d'imprégner dans un premier temps la solution contenant le silicium, de sécher, de calciner et d'imprégner la solution contenant le bore de sécher et de procéder à une calcination finale.

Il est également possible d'imprégner dans un premier temps la solution contenant le bore, de sécher, de calciner et d'imprégner la solution contenant le silicium de sécher et de procéder à une calcination finale.

Pour les préparations de catalyseur contenant du phosphore, il est aussi possible d'imprégner dans un premier temps le précurseur avec une solution contenant du phosphore, de sécher, de calciner puis d'imprégner le solide obtenu avec la solution contenant le bore, de sécher, de calciner et d'imprégner la solution contenant le silicium de sécher et de procéder à une calcination finale.

Dans le cas où les métaux sont introduits en plusieurs imprégnations des sels précurseurs correspondants, une étape de séchage intermédiaire du catalyseur est généralement effectuée à une température généralement comprise entre 60°C et 250°C.

La source de phosphore préférée est l'acide orthophosphorique $H_3PO_4$, mais ses sels et esters comme les phosphates d'ammonium conviennent également. Le phosphore peut par exemple être introduit sous la forme d'un mélange d'acide phosphorique et un composé organique basique contenant de l'azote tels que l'ammoniaque, les amines primaires et secondaires, les amines cycliques, les composés de la famille de la pyridine et des quinoléines et les composés de la famille du pyrrole.

De nombreuses sources de silicium peuvent être employées. Ainsi, on peut utiliser l'orthosilicate d'éthyle Si(OEt)$_4$, les siloxanes, les polysiloxanes, les silicones, les émulsions de silicones, les silicates d'halogénures comme le fluorosilicate d'ammonium $(NH_4)_2SiF_6$ ou le fluorosilicate de sodium $Na_2SiF_6$. L'acide silicomolybdique et ses sels, l'acide silicotungstique et ses sels peuvent également être avantageusement employés. Le silicium peut être ajouté par exemple par imprégnation de silicate d'éthyle en solution dans un mélange eau/alcool. Le silicium peut être ajouté par exemple par imprégnation d'un composé du silicium de type silicone mis en suspension dans l'eau.

La source de bore peut être l'acide borique, de préférence l'acide orthoborique $H_3BO_3$, le biborate ou le pentaborate d'ammonium, l'oxyde de bore, les esters boriques. Le bore peut être introduit sous la forme d'un mélange d'acide borique, d'eau oxygénée et un composé organique basique contenant de l'azote tels que l'ammoniaque, les amines primaires et secondaires, les amines cycliques, les composés de la famille de la pyridine et des quinoléines et les composés de la famille du pyrrole. Le bore peut être introduit par une solution d'acide borique dans un mélange eau/alcool.

Les sources d'éléments du groupe VIIA qui peuvent être utilisées sont bien connues de l'homme du métier. Par exemple, les anions fluorures peuvent être introduits sous forme d'acide fluorhydrique ou de ses sels. Ces sels sont formés avec des métaux alcalins, l'ammonium ou un composé organique. Dans ce dernier cas, le sel est avantageusement formé dans le mélange réactionnel par réaction entre le composé organique et l'acide fluorhydrique. Il est également possible d'utiliser des composés hydrolysables pouvant libérer des anions fluorures dans l'eau, comme le fluorosilicate d'ammonium $(NH_4)_2SiF_6$, le tétrafluorure de silicium $SiF_4$ ou de sodium $Na_2SiF_6$. Le fluor peut être introduit par exemple par imprégnation d'une solution aqueuse d'acide fluorhydrique ou de fluorure d'ammonium.

Les sources d'éléments du groupe VIB qui peuvent être utilisées sont bien connues de l'homme du métier. Par exemple, parmi les sources de molybdène et de tungstène, on peut utiliser les oxydes et hydroxydes, les acides molybdiques et tungstiques et leurs sels en particulier les sels d'ammonium tels que le molybdate d'ammonium, l'heptamolybdate d'ammonium, le tungstate d'ammonium, l'acide phosphomolybdique, l'acide phosphotungstique et leurs sels. On utilise de préférence les oxydes et les sels d'ammonium tels que le molybdate d'ammonium, l'heptamolybdate d'ammonium et le tungstate d'ammonium.

Le catalyseur selon la présente invention renferme au moins un métal choisi parmi les éléments du groupe VIB et/ou VIII, le métal du groupe VIII est, de préférence, le fer, le cobalt ou le nickel.

D'une manière avantageuse on utilise les associations de métaux suivantes : nickel-molybdène, cobalt-molybdène, fer-molybdène, fer-tungstène, nickel-tungstène, cobalt-tungstène, les associations préférées sont : nickel-molybdène, nickel-tungstène. Il est également possible d'utiliser des associations de trois métaux par exemple nickel-cobalt-molybdène.

Les sources d'éléments du groupe VIII qui peuvent être utilisées sont bien connues de l'homme du métier. Par exemple, on utilisera des sources d'éléments du groupe VIII sous forme de nitrates, de sulfates, de phosphates, d'halogénures par exemple, chlorures, bromures et fluorures, ou sous forme de carboxylates par exemple acétates et carbonates.

Les sources d'éléments du groupe VIIB qui peuvent être utilisées sont bien connues de l'homme du métier. On utilise de préférence les sels d'ammonium, les nitrates et les chlorures d'éléments du groupe VIIB.

Le catalyseur de la présente invention renferme donc également au moins une matrice minérale poreuse habituellement amorphe ou mal cristallisée généralement de type oxyde. Cette matrice est habituellement choisie dans le groupe formé par l'alumine, la silice, les silice-alumines ou un mélange d'au moins deux des oxydes cités ci dessus. On peut choisir également les aluminates. On préfère utiliser des matrices contenant de l'alumine, sous toutes les formes connues de l'homme du métier, on utilisera par exemple l'alumine gamma.

On peut aussi avantageusement utiliser des mélanges d'alumine et de silice, des mélanges d'alumine et de silice-alumine.

On peut aussi avantageusement utiliser des mélanges d'alumine et d'argile et des mélanges de silice-alumine et d'argile.

L'imprégnation du molybdène peut être facilitée par ajout d'acide phosphorique dans les solutions de paramolybdate d'ammonium, ce qui permet d'introduire aussi le phosphore de façon à promouvoir l'activité catalytique.

Les catalyseurs obtenus par la présente invention sont mis en forme sous la forme de grains de différentes formes et dimensions. Ils sont utilisés en général sous la forme d'extrudés cylindriques ou polylobés tels que bilobés, trilobés, polylobés de forme droite ou torsadée, mais peuvent éventuellement être fabriqués et employés sous la forme de poudres concassées, de tablettes, d'anneaux, de billes, de roues. Ils présentent une surface spécifique mesurée par adsorption d'azote selon la méthode BET (Brunauer, Emmett, Teller, J. Am. Chem. Soc., vol. 60, 309-316 (1938)) comprise entre 50 et 600 m$^2$/g, un volume poreux mesuré par porosimétrie au mercure compris entre 0,2 et 1,5 cm$^3$/g et une distribution en taille de pores pouvant être monomodale, bimodale ou polymodale.

L'invention concerne également les procédés de conversion de charges hydrocarbonées avec le catalyseur décrit ci-dessus et en particulier les procédés d'hydrocraquage.

Les charges employées dans le procédé sont des essences, des kérosènes des gas-oils, des gas-oils sous vide, des résidus atmosphériques, des résidus sous vide, des distillats atmosphériques, des distillats sous vide, des fuels lourds, des huiles, des cires et des paraffines, des huiles usagées, des résidus ou des bruts désasphaltés, des charges provenant des procédés de craquage thermique (sans hydrogène) ou de craquage catalytique en lit fluidisé (F.C.C) et leurs mélanges. Elles contiennent des hétéroatomes tels que soufre, oxygène et azote et éventuellement des métaux.

En particulier les catalyseurs ainsi obtenus sont avantageusement utilisés pour l'hydrocraquage de coupes hydrocarbonées lourdes de type distillats sous vide, résidus désasphaltés ou hydrotraités ou équivalents. Ces coupes lourdes sont de préférence constituées d'au moins de 80% en volume de composés dont les points d'ébullition sont supérieurs à 350°C et de préférence compris entre 350 et 580 °C. Elles contiennent généralement des hétéroatomes tels que soufre et azote. La teneur en azote est usuellement comprise entre 1 et 5000 ppm poids et la teneur en soufre entre 0,01 et 5% poids par rapport à la charge totale.

Les conditions de l'hydrocraquage telles que température, pression, taux de recyclage d'hydrogène, vitesse volumique horaire, pourront être très variables en fonction de la nature de la charge, de la qualité des produits désirés et des installations dont dispose le raffineur. La température est en général supérieure à 200°C et souvent comprise entre 250°C et 480°C. La pression est supérieure à 0,1 MPa et souvent supérieure à 1 MPa. Le taux de recyclage d'hydrogène est au minimum de 50 et souvent compris entre 80 et 5000 litres normaux d'hydrogène par litre normal de charge. La vitesse volumique horaire est comprise en général entre 0,1 et 20 volume de charge par volume de catalyseur et par heure.

Les catalyseurs de la présente invention sont de préférence soumis à un traitement de sulfuration permettant de transformer, au moins en partie, les espèces métalliques en sulfures avant leur mise en contact avec la charge à traiter. Ce traitement d'activation par sulfuration est bien connu de l'homme du métier et peut être effectué par toute méthode déjà décrite dans la littérature.

Une méthode de sulfuration classique bien connue de l'homme du métier consiste à chauffer le catalyseur en présence d'hydrogène sulfuré à une température comprise entre 150°C et 800°C, de préférence entre 250°C et 600°C, généralement dans une zone réactionnelle à lit traversé.

Le catalyseur de la présente invention peut être avantageusement employé pour l'hydrocraquage de coupes de type distillats sous vide fortement chargée en soufre et azote.

Dans un premier mode de réalisation ou d'hydrocraquage partiel encore appelé hydrocraquage doux, le niveau de conversion est inférieur à 55%. Le catalyseur selon l'invention est alors employé à une température en général supérieure ou égale à 230°C et de préférence supérieure ou égale à 300°C, généralement d'au plus 480°C, et souvent comprise entre 350°C et 450°C. La pression est en général supérieure à 2 MPa et de préférence 3 MPa. La quantité d'hydrogène est au minimum de 100 normaux litre d'hydrogène par litre normal de charge et souvent comprise entre 200 et 3000 normaux litre d'hydrogène par litre normal de charge. La vitesse volumique horaire est comprise en général entre 0,1 h$^{-1}$ et 10 h$^{-1}$. Dans ces conditions, les catalyseurs de la présente invention présentent une meilleure activité en conversion, en hydrodésulfuration et en hydrodéazotation que les catalyseurs commerciaux.

Dans un second mode de réalisation, le catalyseur de la présente invention peut être employé pour l'hydrocraquage partiel, avantageusement dans des conditions de pression d'hydrogène modérée, de coupes par exemple de type distillats sous vide fortement chargées en soufre et azote qui ont été préalablement hydrotraitées. Dans ce mode d'hydrocraquage le niveau de conversion est inférieur à 55%. Dans ce cas le procédé de conversion de coupe pétrolière se déroule en deux étapes, les catalyseurs selon l'invention étant utilisés dans la deuxième étape. Le catalyseur de la première étape a une fonction d'hydrotraitement et comprend une matrice de préférence à base d'alumine, et de préférence ne contenant pas de zéolithe, et au moins un métal ayant une fonction hydrogénante. Ladite matrice est choisie dans le groupe formé par l'alumine, la silice-alumine, la magnésie, la zircone, l'oxyde de titane, les aluminates et leurs mélanges. La fonction d'hydrotraitement est assurée par au moins un métal ou composé de métal du groupe VIII tels que le nickel et le cobalt notamment. On peut utiliser une combinaison d'au moins un métal ou composé de métal du groupe VI (notamment le molybdène ou le tungstène) et d'au moins un métal ou composé de métal du groupe VIII (notamment le cobalt ou le nickel) de la classification périodique des éléments. Lorsque le catalyseur comprend un métal du groupe VI et un métal du groupe VIII, la concentration totale en oxydes de métaux des groupes VI et VIII est comprise entre 5 et 40 % en poids et de préférence entre 7 et 30 % en poids et le rapport pondéral exprimé en oxyde métallique de métal (ou métaux) du groupe VI sur métal (ou métaux) du groupe VIII est compris entre 1,25 et 20 et de préférence entre 2 et 10. De plus, ce catalyseur peut contenir du phosphore. La teneur en phosphore, exprimée en concentration en pentaoxyde de diphosphore $P_2O_5$ dans le catalyseur fini sera alors généralement d'au plus 15%, de préférence comprise entre 0,1 et 15 % en poids et de préférence comprise entre 0,15 et 10% en poids. Le catalyseur peut également contenir du bore dans un rapport B/P comprise entre 1,05 et 2 (atomique), la somme des teneurs en B et P exprimée en oxydes étant compris entre 5 et 15 % poids par rapport au poids du catalyseur fini.

La première étape se déroule généralement à une température comprise entre 350 et 460°C, de préférence entre 360 et 450°C, une pression totale d'au moins 2 MPa; et de préférence 3 MPa, une vitesse volumique horaire compris entre 0,1h$^{-1}$ et 5h$^{-1}$ et de préférence entre 0,2 h$^{-1}$ et 2h$^{-1}$ et avec une quantité d'hydrogène d'au moins 100 litres normaux par litre normal de charge, et de préférence comprise entre 260 et 3000 litres normaux par litre normal de charge. Dans ce second mode de réalisation, pour l'étape de conversion avec le catalyseur selon l'invention (ou seconde étape), les températures sont en général supérieures ou égales à 230°C et souvent comprises entre 300°C et 430°C. La pression est en général d'au moins 2 MPa et de préférence 3 Mpa, elle est inférieure à 12 Mpa et de préférence inférieure à 10 MPa. La quantité d'hydrogène est au minimum de 100 litre par litre de charge et souvent comprise entre 200 et 3000 litre d'hydrogène par litre de charge. La vitesse volumique horaire est comprise en général entre 0,15h$^{-1}$ et 10h$^{-1}$. Dans ces conditions, les catalyseurs de la présente invention présentent une meilleure activité en conversion, en hydrodésulfuration, en hydrodéazotation et une meilleure sélectivité en distillats moyens que les catalyseurs commerciaux. La durée de vie des catalyseurs est également améliorée dans la plage de pression modérée.

Dans un troisième mode de réalisation, le catalyseur de la présente invention peut être employé pour l'hydrocraquage dans des conditions de pression d'hydrogène élevées d'au moins 5 MPa, de préférence d'au moins 10 MPa, et avantageusement d'au moins 12 MPa. Les coupes traitées sont par exemple de type distillats sous vide fortement chargée en soufre et azote qui ont été préalablement hydrotraitées. Dans ce mode d'hydrocraquage le niveau de conversion est supérieur ou égal à 55%. Dans ce cas, le procédé de conversion de coupe pétrolière se déroule en deux étapes, le catalyseur selon l'invention étant utilisé dans la deuxième étape.

Le catalyseur utilisé à la première étape de troisième mode de réalisation est identique à celui utilisé à la première étape du deuxième mode de réalisation, il est utilisé dans les conditions décrites, la pression étant ajustée à celle de l'autre mode de réalisation.

Cette première étape se déroule généralement à une température de 350-460°C, de préférence 360-450°C, une pression supérieure à 3MPa, une vitesse volumique horaire de 0,1-5h$^{-1}$ et de préférence 0,2-2h$^{-1}$ et avec une quantité d'hydrogène d'au moins 100Nl/Nl de charge, et de préférence 260-3000Nl/Nl de charge.

Pour l'étape de conversion avec le catalyseur selon l'invention (ou seconde étape), les températures sont en général supérieures ou égales à 230°C et souvent comprises entre 300°C et 430°C. La pression est en général supérieure à 2MPa et de préférence supérieure à 3 MPa. La quantité d'hydrogène est au minimum de 100 litre par litre de charge et souvent comprise entre 200 et 3000 litre par litre d'hydrogène par litre de charge. La vitesse volumique horaire est comprise en général entre 0,15 h$^{-1}$ et 10h$^{-1}$.

Dans ces conditions, les catalyseurs de la présente invention présentent une meilleure activité en conversion et une meilleure sélectivité en distillats moyens que les catalyseurs commerciaux, même pour des teneurs en zéolithe considérablement plus faibles que celles des catalyseurs commerciaux.

Les exemples suivants illustrent la présente invention sans toutefois en limiter la portée.

Un phyllosilicate 2:1 dioctaédrique ponté PDP, qui est un phyllosilicate 2 :1 dioctaèdrique sous forme ammonium a été préparé.

Pour cette préparation, à 36 g d'eau distillée, on ajoute successivement :

0,385 g du sel $NH_4F$ (Prolabo) sous agitation modérée,

0,312 g de l'acide HF à 40% (Fluka),

2,71 g de l'oxyhydroxyde hydraté AlOOH (Catapal B Vista) sous agitation vigoureuse,

2,50 g de l'oxyde $SiO_2$ pulvérulent (Aerosil 130 de Degussa), sous agitation modérée.

La composition de l'hydrogel ainsi préparé, rapportée à une mole de l'oxyde $SiO_2$ est

1,0 $SiO_2$ ; 0,44 $Al_2O_3$ ; 0,25 $NH_4F$ ; 0,15 HF; 48 $H_2O$

soit en terme de rapport molaire :

| | |
|---|---|
| Si/Al = | 1,136 |
| $NH_4^+$/Si = | 0,25 |
| F/Si = | 0,40 |
| HF/Si = | 0,15 |
| $H_2O$/Si = | 48 |

Cette composition ne tient pas compte de l'eau apportée par la source d'aluminium et par l'acide HF.

L'hydrogel ainsi obtenu est maintenu 4 heures à la température ambiante (20°C) sous agitation modérée. Le pH est alors voisin de 5.

La cristallisation s'effectue ensuite dans un autoclave en acier, chemisé par un revêtement Teflon, d'une contenance de 120 ml, à 220°C, sous pression autogène durant 168 heures sans agitation. L'autoclave est ensuite refroidi à l'air ambiant. Le pH de fin de synthèse est d'environ 5,5.

Le produit est ensuite récupéré, filtré et lavé abondamment à l'eau distillée. Il est alors séché à 40-50°C durant 24 heures. Au bout de ces 24 heures, le produit obtenu, à 50% d'humidité relative, est caractérisé par son diagramme de diffraction des rayons X ci-après (tableau 1).

Tableau 1

| $d_{hkl}$ ($10^{-10}$m ) | I/Io |
|---|---|
| 10,87 | 73 |
| 5,32 | 12 |
| 4,46 | 100 |
| 2,58 | 30 |
| 2,56 | 43 |
| 2,2 | 46 |
| 2,1 | 77 |
| 2,0 | 77 |
| 1,69 | 11 |
| 1,49 | 22 |

La teneur pondérale en fluor du phyllosilicate obtenu est de 2,9%. Un signal à -133 ppm est présent dans le spectre de RMN, obtenu par rotation à l'angle magique, du $^{19}$F du phyllosilicate obtenu.

Le phyllosilicate 2:1 dioctaédrique sous forme d'ammonium ainsi préparé est dénommé PD. Ce dernier peut ensuite subir une étape de pontage selon le mode opératoire décrit ci-après. Ainsi 8 g du phyllosilicate 2:1 dioctaédrique PD sont mis en suspension dans 80 ml d'une solution de chlorure d'hexadécyltriméthylammonium (CTMA-Cl) de concentration 0,1 M. Après une heure d'agitation à température ambiante, l'ensemble est filtré, lavé avec deux fois 200 ml d'eau distillée puis séché à 60°C durant 8 heures. L'échantillon PD traité au CTMA est mis en suspension dans un mélange composé de 4,48g d'octylamine ($C_8H_{17}NH_2$), de 60,32g de tétraorthosilicate d'éthyle ($Si(OEt)_4$) et de 2,96g d'isoproxide d'aluminium. Après 30 minutes d'agitation, l'ensemble est filtré et puis séché à 60°C durant 8 heures. Cet échantillon est ensuite calciné à 530°C durant 3 heures sous air puis 2 heures sous oxygène pur. La $d_{001}$ de l'échantillon après calcination est de 31,2 Å et une surface spécifique de 375 m$^2$/g. Le phyllosilicate 2:1 dioctaédrique ponté ainsi préparé est dénommé PDP

Un support de catalyseur d'hydrocraquage contenant le phyllosilicate 2:1 dioctaédrique PD a été fabriqué en grande quantité de façon à pouvoir préparer différents catalyseurs à base du même support. Pour cela on utilise 19,3 % poids du phyllosilicate 2:1 dioctaédrique PD que l'on mélange à 80,7 % poids d'une matrice composée de boehmite tabulaire ultrafine ou gel d'alumine commercialisée sous le nom SB3 par la société Condéa Chemie Gmbh. Ce mélange de poudre a été ensuite mélangé à une solution aqueuse contenant de l'acide nitrique à 66% poids (7% poids d'acide par gramme de gel sec) puis malaxé pendant 15 minutes. A l'issue de ce malaxage, la pâte obtenue est passée à travers une filière ayant des orifices cylindriques de diamètre égal à 1,4 mm. Les extrudés sont ensuite séchés une nuit à 120°C sous air puis calcinés à 550°C sous air.

Un support de catalyseur d'hydrocraquage contenant le phyllosilicate 2:1 dioctaédrique ponté PDP a été également fabriqué en grande quantité de façon à pouvoir préparer différents catalyseurs à base du même support. Pour cela on utilise 20,5 % poids du phyllosilicate 2:1 dioctaédrique ponté PDP que l'on mélange à 79,5 % poids d'une matrice composée de boehmite tabulaire ultrafine ou gel d'alumine commercialisée sous le nom SB3 par la société Condéa Chemie Gmbh. Ce mélange de poudre a été ensuite mélangé à une solution aqueuse contenant de l'acide nitrique à 66% poids (7% poids d'acide par gramme de gel sec) puis malaxé pendant 15 minutes. A l'issue de ce malaxage, la pâte obtenue est passée à travers une filière ayant des orifices cylindriques de diamètre égal à 1,4 mm. Les extrudés sont ensuite séchés une nuit à 120°C sous air puis calcinés à 550°C sous air.

Exemple 1: Préparation de catalyseurs contenant un phyllosilicate 2:1 dioctaédrique ponté

Les extrudés de support contenant le phyllosilicate 2:1 dioctaédrique ponté PDP préparés selon la procédure décrite ci-dessus sont imprégnés à sec par une solution aqueuse d'un mélange d'heptamolybdate d'ammonium et de nitrate de nickel, séchés une nuit à 120°C sous air et enfin calcinés sous air à 550°C. Les teneurs pondérales en oxydes du catalyseur obtenus sont indiquées dans le tableau 2. Le catalyseur CZ14 final contient en particulier 17,4 % poids du phyllosilicate 2:1 dioctaédrique ponté PDP.

Les extrudés de support contenant le phyllosilicate 2:1 dioctaédrique ponté PDP sont imprégnés à sec par une solution aqueuse d'un mélange d'heptamolybdate d'ammonium, de nitrate de nickel et d'acide orthophosphorique, séchés une nuit à 120°C sous air et enfin calcinés sous air à 550°C. On obtient ainsi le catalyseur CZ14P.

Nous avons imprégné l'échantillon de catalyseur CZ14P décrit ci-dessus par une solution aqueuse renfermant du biborate d'ammonium. Après maturation à température ambiante dans une atmosphère saturée en eau, les extrudés imprégnés sont séchés pendant une nuit à 120°C puis calcinés à 550°C pendant 2 heures sous air sec. On obtient un catalyseur nommé CZ14PB : NiMoP/alumine-beidellite dopée au bore.

Un catalyseur CZ14PSi a été obtenu par la même procédure que le catalyseur CZ14PB ci-dessus mais en remplaçant dans la solution d'imprégnation le précurseur de bore par l'émulsion de silicone Rhodorsil EP1 (Rhone-Poulenc).

Enfin, un catalyseur CZ14PBSi a été obtenu imprégnation du catalyseur CZ14P une solution aqueuse renfermant le biborate d'ammonium et l'émulsion de silicone Rhodorsil EP1(Rhone-Poulenc). Les autres étapes de la procédure sont les mêmes que celles indiquées ci dessus. On ajoute ensuite à ce catalyseur du fluor par imprégnation d'une solution d'acide fluorhydrique diluée de manière à déposer environ 1 % en poids de fluor. Après séchage pendant une nuit à 120°C et calcination à 550°C pendant 2 heures sous air sec on obtient le catalyseur CZ14PBSiF. Les caractéristiques des catalyseurs CZ14 sont résumées dans le tableau 2.

Tableau 2 :

| Caractéristiques des catalyseurs CZ14 | | | | | |
|---|---|---|---|---|---|
| Catalyseur | CZ14 | CZ14 PB | CZ14 PSi | CZ14 PBSi | CZ14 PBSiF |
| MoO$_3$(%pds) | 12,3 | 11,6 | 11,6 | 11,4 | 11,2 |
| NiO (% pds) | 2,8 | 2,7 | 2,7 | 2,6 | 2,6 |

Tableau 2 :   (suite)

| Caractéristiques des catalyseurs CZ14 | | | | | |
|---|---|---|---|---|---|
| Catalyseur | CZ14 | CZ14 PB | CZ14 PSi | CZ14 PBSi | CZ14 PBSiF |
| $P_2O_5$ (% pds) | 0 | 4,7 | 4,7 | 4,6 | 4,6 |
| $B_2O_3$ (% pds) | 0 | 1,9 | 0 | 1,8 | 1,8 |
| $SiO_2$ (%pds) | 11,6 | 10,8 | 12,6 | 12,3 | 12,1 |
| F (% pds) | 0 | 0 | 0 | 0 | 1,5 |
| Complément à 100% majoritairement $Al_2O_3$ (% pds) | 73,3 | 68,3 | 68,4 | 67,3 | 66,2 |

Le catalyseur CZ14P a ensuite été imprégné par une solution aqueuse renfermant du nitrate de manganèse. Après maturation à température ambiante dans une atmosphère saturée en eau, les extrudés imprégnés sont séchés pendant une nuit à 120°C puis calcinés à 550°C pendant 2 heures sous air sec. On obtient un catalyseur nommé CZ14PMn. On imprègne ensuite ce catalyseur par une solution aqueuse renfermant le biborate d'ammonium et l'émulsion de silicone Rhodorsil EP1(Rhone-Poulenc). Les extrudés imprégnés sont alors séchés pendant une nuit à 120°C puis calcinés à 550°C pendant 2 heures sous air sec et on obtient le catalyseur CZ14PMnBSi. On ajoute ensuite à ce catalyseur du fluor par imprégnation d'une solution d'acide fluorhydrique diluée de manière à déposer environ 1 % en poids de fluor. Après séchage pendant une nuit à 120°C et calcination à 550°C pendant 2 heures sous air sec on obtient le catalyseur CZ14PMnBSiF. Les teneurs pondérales de ces catalyseurs sont indiquées dans le tableau 3.

Tableau 3 :

| Caractéristiques des catalyseurs CZ14 contenant du manganèse | | |
|---|---|---|
| Catalyseur | CZ14 PMnBSi | CZ14 PMnBSiF |
| $MoO_3$ (% pds) | 11,1 | 10,9 |
| NiO (% pds) | 2,5 | 2,5 |
| $MnO_2$ (% pds) | 1,9 | 1,9 |
| $P_2O_5$ (% pds) | 4,7 | 4,6 |
| $B_2O_3$ (% pds) | 1,7 | 1,8 |
| $SiO_2$ (%pds) | 12,1 | 11,9 |
| F (%pds) | 0 | 1,6 |
| Complément à 100% majoritairement $Al_2O_3$ (% pds) | *66,0* | *64,8* |

L'analyse, par microsonde électronique, des catalyseurs CZ14PSi, CZ14PBSi, CZ14PBSiF (tableau 2) et des catalyseurs CZ14PMnBSi, CZ14PMnBSiF (tableau 3) montre que le silicium ajouté au catalyseur selon l'invention est principalement localisé sur la matrice et se trouve sous forme de silice amorphe.

Exemple 2: Préparation de catalyseurs contenant un phyllosilicate 2:1 dioctaédrique non ponté

Les extrudés de support contenant le phyllosilicate 2:1 dioctaédrique non ponté PD préparés selon la procédure décrite ci-dessus sont imprégnés à sec par une solution aqueuse d'un mélange d'heptamolybdate d'ammonium de nitrate de nickel et d'acide orthophosphorique, séchés une nuit à 120°C sous air et enfin calcinés sous air à 550°C. On obtient ainsi le catalyseur CZ19P.
On imprègne ensuite ce catalyseur CZ19P par une solution aqueuse renfermant le biborate d'ammonium et l'émulsion de silicone Rhodorsil EP1(Rhone-Poulenc). Les extrudés imprégnés sont alors séchés pendant une nuit à 120°C puis calcinés à 550°C pendant 2 heures sous air sec et on obtient le catalyseur CZ19PBSi.

# EP 0 962 250 A1

Tableau 4 :

| Caractéristiques des catalyseurs CZ19 | | |
|---|---|---|
| Catalyseur | CZ19 P | CZ19 PBSi |
| $MoO_3$ (% pds) | 12,0 | 11,6 |
| NiO (% pds) | 2,8 | 2,7 |
| $P_2O_5$ (% pds) | 4,6 | 4,4 |
| $B_2O_3$ (% pds) | 0 | 1,9 |
| $SiO_2$ (% pds) | 7,3 | 8, 7 |
| Complément à 100% majoritairement A1203 (% pds) | 73,3 | 70,7 |

L'analyse par microsonde électronique, du catalyseur CZ19PBSi (tableau 4) montre que le silicium ajouté au catalyseur selon l'invention est principalement localisé sur la matrice et se trouve sous forme de silice amorphe.

Exemple 3 : Comparaison des catalyseurs en hydrocraquage d'un gazole sous vide à conversion partielle.

Les catalyseurs dont les préparations sont décrites dans les exemples précédents sont utilisés dans les conditions de l'hydrocraquage à pression modérée sur une charge pétrolière dont les principales caractéristiques sont les suivantes :

| | |
|---|---|
| Densité (20/4) | 0,921 |
| Soufre (% poids) | 2,46 |
| Azote (ppm poids) | 1130 |
| Distillation simulée | |
| Point initial | 365°C |
| Point 10 % | 430°C |
| Point 50 % | 472°C |
| Point 90 % | 504°C |
| Point final | 539°C |
| Point d'écoulement | + 39°C |

L'unité de test catalytique comprend deux réacteurs en lit fixe, à circulation ascendante de la charge ("upflow). Dans le premier réacteur, celui dans lequel la charge passe en premier, on introduit le catalyseur de première étape d'hydrotraitement HTH548 vendu par la société Procatalyse comprenant un élément du groupe VI et un élément du groupe VIII déposés sur alumine. Dans le second réacteur, celui dans lequel la charge passe en dernier, on introduit un des catalyseurs d'hydrocraquage décrits ci-dessus. Dans chacun des réacteurs, on introduit 40 ml de catalyseur. Les deux réacteurs fonctionnement à la même température et à la même pression. Les conditions opératoires de l'unité de test sont les suivantes :

| | |
|---|---|
| Pression totale | 5 MPa |
| Catalyseur d'hydrotraitement | 40 $cm^3$ |
| Catalyseur d'hydrocraquage | 40 $cm^3$ |
| Température | 400°C |
| Débit d'hydrogène | 20 l/h |
| Débit de charge | 40 $cm^3$/h |

Les deux catalyseurs subissent une étape de sulfuration in-situ avant réaction. Notons que toute méthode de sulfuration in-situ ou ex-situ est convenable. Une fois la sulfuration réalisée, la charge décrite ci-dessus peut être transformée.

Les performances catalytiques sont exprimées par la conversion brute à 400°C (CB), par la sélectivité brute en distillats moyens (SB) et par les conversions en hydrodésulfuration (HDS) et en hydrodéazotation (HDN). Ces performances catalytiques sont mesurées sur le catalyseur après qu'une période de stabilisation, généralement au moins 48 heures, ait été respectée.

La conversion brute CB est prise égale à :

$$CB = \% \text{ pds de } 380°C^{-} \text{ de l'effluent}$$

La fraction $380°C^{-}$ de l'effluent signifiant la partie de l'effluent bouillant en dessous de 380°C.

La sélectivité brute SB en distillats moyens est prise égale à :

$$SB = 100*\text{poids de la fraction } (150°C\text{-}380°C)/\text{poids de la fraction } 380°C^{-} \text{ de l'effluent}$$

La conversion en hydrodésulfuration HDS est prise égale à :

$$HDS = (S_{initial} - S_{effluent}) / S_{initial} * 100 = (24600 - S_{effluent}) / 24600 * 100$$

La conversion en hydrodéazotation HDN est prise égale à :

$$HDN = (N_{initial} - N_{effluent}) / N_{initial} * 100 = (1130 - N_{effluent}) / 1130 * 100$$

Dans le tableau 5 suivant, nous avons reporté la conversion brute CB à 400°C, la sélectivité brute SB, la conversion en hydrodésulfuration HDS et la conversion en hydrodéazotation HDN pour les quatre catalyseurs.

Tableau 5

| Activités catalytiques des catalyseurs en hydrocraquage partiel à 400°C | | | | | |
|---|---|---|---|---|---|
| | | CB (%pds) | SB | HDS (%) | HDN (%) |
| CZ14 | NiMo/PDP | 42,9 | 81,0 | 98,1 | 92,5 |
| CZ14PB | NiMoPB/ PDP | 43,5 | 81,8 | 98,57 | 94,2 |
| CZ14PSi | NiMoPSi/PDP | 43,8 | 81,9 | 98,56 | 94,8 |
| CZ14PBSi | NiMoPBSi/PDP | 44,7 | 81,1 | 98,73 | 96,6 |

Les résultats du tableau 5 montrent que l'association des deux dopants B et/ou Si apporte une amélioration des performances du catalyseur contenant un phyllosilicate 2:1 dioctaédrique ponté en conversion. La sélectivité brute en distillats moyen diminue du fait de l'augmentation du niveau de conversion comme il est bien connu. Les catalyseurs de l'invention contenant du bore et/ou du silicium sont donc particulièrement intéressants pour l'hydrocraquage partiel de charge de type distillats sous vide contenant de l'azote à une pression d'hydrogène modérée.

Exemple 4 : Tests d'hydrocraquage d'un distillat sous vide à haute conversion

Les catalyseurs dont les préparations sont décrites dans les exemples précédents sont utilisés dans les conditions de l'hydrocraquage à haute conversion (60-100%) sur une charge pétrolière de type distillats sous vide à forte teneur en soufre et en azote dont les principales caractéristiques sont les suivantes :

| | |
|---|---|
| Densité à 15°C | 0,912 |
| Soufre | 2,22%poids |
| Azote total | 598 ppm poids |
| Distillation Simulée | |
| PI | 345 °C |
| 10% | 375°C |
| 50% | 402°C |
| 90% | 428°C |
| PF | 467°C |

L'unité de test catalytique comprend un réacteur en lit fixe, à circulation ascendante de la charge ("up-flow"). Le test d'hydrocraquage est mené dans les conditions opératoires suivantes :

| Pression totale | 20 MPa |
| Volume de catalyseur | 40 cm$^3$ |
| Température | 380 à 420°C |
| Débit d'hydrogène | 24 l/h |
| Débit de charge | 20 cm$^3$/h |

Chacun des catalyseurs est sulfuré avant le test à 350°C, et à une pression totale de 20 MPa par la charge à laquelle on a ajouté 2% en poids de diméthyldisulfure (DMDS).

Dans ces conditions, les performances catalytiques en hydrodésulfuration (HDS) et en hydrodéazotation (HDN) sont telles que les teneurs en soufre et en azote dans l'effluent sont inférieures à la limite de détection des techniques d'analyse standard. Cette observation est normale compte tenu de la haute pression d'hydrogène employée. On s'intéresse alors principalement la conversion brute (CB). Ces performances catalytiques sont mesurées sur le catalyseur après qu'une période de stabilisation, généralement au moins 48 heures, ait été respectée.

La conversion brute CB est prise égale à :

$$CB = \% \text{ pds de } 380°C^- \text{ de l'effluent}$$

Dans le tableau 6 suivant, nous avons reporté la conversion brute CB à 410°C pour les catalyseurs testés dans ces conditions et la sélectivité brute en distillats moyens (150-380°C).

Tableau 6

| Activités catalytiques des catalyseurs en hydrocraquage haute conversion | | | |
|---|---|---|---|
| | | CB (%) | SB (%) |
| CZ14 | NiMo/PDP | 76,1 | 70,3 |
| CZ14PB | NiMoPB/PDP | 78,3 | 69,2 |
| CZ14PSi | NiMoPSi/PDP | 80,1 | 68,3 |
| CZ14PBSi | NiMoPBSi/PDP | 84,2 | 66,8 |
| CZ14PBSiF | NiMoPBSiF/PDP | 85,1 | 66,2 |
| CZ19P | NiMoP/PD | 75,2 | 71,1 |
| CZ19PBSi | NiMoPBSi/PD | 81,2 | 68,0 |
| CZ14PMnBSi | NiMoPMnBSi/PDP | 84,9 | 66,5 |
| CZ14PMnBSiF | NiMoPMnBSiF/PDP | 86,0 | 65,7 |

L'ajout de bore et/ou de silicium au catalyseur contenant le phyllosilicate 2:1 dioctaédrique ponté permet d'améliorer l'activité en conversion, ce qui se traduit par une augmentation du niveau de conversion à 410°C. La sélectivité brute en distillats moyen diminue du fait de l'augmentation du niveau de conversion comme il est bien connu.

Le catalyseur CZ14PBSi contenant du bore et du silicium est donc particulièrement intéressant pour une utilisation dans des procédés d'hydrocraquage de charges de type distillats sous vide à forte teneur en soufre et en azote, généralement dénommé hydrocraquage à l'aide de catalyseur amorphe, à une pression d'hydrogène élevée.

De même l'ajout de bore et de silicium au catalyseur CZ19P contenant le phyllosilicate 2:1 dioctaédrique non ponté permet d'améliorer l'activité en conversion, ce qui se traduit par une augmentation du niveau de conversion à 410°C. La sélectivité brute en distillats moyen diminue du fait de l'augmentation du niveau de conversion comme il est bien connu.

De plus, si l'on ajoute du manganèse et/ou du fluor on constate également une amélioration du niveau de conversion donc de l'activité convertissante.

**Revendications**

1. Catalyseur caractérisé en ce qu'il comprend au moins métal choisi dans le groupe formé par le groupe VIB et le groupe VIII et au moins un support contenant au moins une matrice poreuse choisi dans le groupe formé par les matrices amorphes ou mal cristallisées et au moins une argile pontée choisie dans le groupe formé par les phyllosilicates 2:1 dioctaédriques et les phyllosilicates 2:1 trioctaédriques, le support contenant au moins un métal promoteur choisi dans le groupe formé par le bore et le silicium.

2. Catalyseur selon la revendication 1 caractérisé en ce qu'il contient au moins un phyllosilicate 2:1 dioctaédrique ponté dont la distance réticulaire est au moins égale à $2,0 \times 10^{-9}$m et contenant des piliers à base d'au moins un des composés choisi dans le groupe formé par $SiO_2$, $Al_2O_3$, $ZrO_2$ et $V_2O_5$.

3. Catalyseur selon l'une des revendications précédentes caractérisé en ce qu'il contient du phosphore.

4. Catalyseur selon l'une des revendications précédentes caractérisé en ce qu'il contient au moins un élément choisi dans le groupe formé par le groupe VIIA des halogènes et le groupe VIIB.

5. Catalyseur selon l'une des revendications 1 à 4 caractérisé en ce que l'élément promoteur est déposé principalement sur la matrice.

6. Catalyseur selon l'une des revendications 1 à 5 caractérisé en ce que l'argile est un phyllosilicate 2:1 dioctaédrique préparé en milieu fluorure.

7. Catalyseur selon l'une des revendications 1 à 6 dans lequel les éléments choisi dans le groupe formé par le groupe VIB et le groupe VIII sont des combinaisons nickel-molybdène, nickel-tungstène, cobalt-molybdène, cobalt-tungstène, nickel-cobalt-molybdène.

8. Catalyseur selon l'une des revendications 1 à 7 caractérisé en ce qu'il contient de 0,1 à 60 % d'au moins un métal choisi parmi le groupe VIB et le groupe VIII (en % d'oxyde),

   de 0,1 à 99% d'au moins une matrice minérale poreuse choisie dans le groupe formé par les matrices amorphes ou mal cristallisées,
   de 0,1 à 90% d'au moins un phyllosilicate 2:1 dioctaédrique,
   entre 0,1 et 20 % (en % d'oxyde) d'au moins un métal promoteur choisi dans le groupe formé par le bore et le silicium.

9. Catalyseur selon l'une des revendications 1 à 8 caractérisé en ce qu'il contient du phosphore présent en un pourcentage exprimé en pourcentage d'oxydes compris entre 0 à 20%.

10. Catalyseur selon l'une des revendications 1 à 9 caractérisé en ce qu'il contient au moins un élément choisi dans le groupe formé par le groupe VIIA des halogènes et le groupe VIIB, le métal du groupe VIIA étant présent en une teneur comprise entre 0 et 20% et le métal du groupe VIIB étant présent en un pourcentage exprimé en pourcentage d'oxydes compris entre 0 à 20%.

11. Procédé de préparation de catalyseur selon l'une des revendication 1 à 10.

12. Procédé selon la revendication 11 caractérisé en ce qu'on prépare un support comprenant une matrice poreuse choisie dans le groupe formé par les matrices amorphes ou mal cristallisée, au moins une argile choisie dans le groupe formé par les phyllosilicates 2:1 dioctaédriques et les phyllosilicates 2:1 trioctaédriques, sur lequel on dépose au moins métal choisi dans le groupe formé par le groupe VIB et le groupe VIII puis on imprègne ce support par au moins une solution choisie parmi les solutions aqueuses de bore et de silicium.

13. Procédé selon la revendication 12 caractérisé en ce qu'on imprègne le support par au moins une solution aqueuse de phosphore.

14. Procédé selon la revendication 12 ou 13 caractérisé en ce que le support contient un élément du groupe VIB.

15. Procédé selon l'une des revendications 12 à 14 caractérisé en ce qu'on imprègne le support par au moins une solution d'ions du groupe VIIA.

16. Utilisation d'un catalyseur selon l'une des revendications 1 à 10 ou obtenu selon l'une des revendications 11 à 15 pour la conversion des hydrocarbures.

17. Utilisation d'un catalyseur selon la revendication 16 pour l'hydrocraquage.

# EP 0 962 250 A1

**Office européen des brevets**

## RAPPORT DE RECHERCHE EUROPEENNE

Numéro de la demande

EP 99 40 1061

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| P,X | FR 2 758 278 A (I. F. P.) 17 juillet 1998<br><br>* page 14, ligne 11 - page 21, ligne 19 *<br>--- | 1,3,4,<br>7-11,16,<br>17 | B01J29/03<br>C10G47/12 |
| X | GB 2 063 699 A (CHIYODA CHEMICAL ENGINEERING & CONSTRUCTION CO LTD) 10 juin 1981<br>EN PARTICULIER PAGE 6, LIGNE 27 À PAGE 9, LIGNE 8 ET PAGE 10, LIGNES 23-33<br>--- | 1,3,7,<br>11,16,17 | |
| E | EP 0 908 233 A (I. F. P.) 14 avril 1999<br><br>* le document en entier *<br>--- | 1-3,6-9,<br>16,17 | |
| A | EP 0 792 686 A (I. F. P.) 6 janvier 1936<br>* le document en entier *<br>--- | 1 | |
| A | FR 2 571 982 A (I.F.P.) 25 avril 1986<br>* le document en entier *<br>--- | 1 | |
| A | FR 2 194 767 A (SHELL FRANCAISE) 1 mars 1974<br>* page 4, ligne 3 - page 6, ligne 36 *<br>--- | 1,3,4,7,<br>11,16,17 | **DOMAINES TECHNIQUES RECHERCHES** (Int.Cl.6)<br>B01J<br>C10G<br>C01B |
| A | US 5 405 996 A (TOSHIRO SUZUKI ET AL.) 11 avril 1995<br>* revendications 1,2,11 *<br>--- | 1,11 | |
| A | US 3 716 475 A (S. M. CSICSERY ET AL.) 13 février 1973<br>* revendication 1 *<br>--- | 1,4 | |
| A | EP 0 537 064 A (I. F. P.) 14 avril 1993<br>* le document en entier *<br>----- | 1 | |

Le présent rapport a été établi pour toutes les revendications

| Lieu de la recherche | Date d'achèvement de la recherche | Examinateur |
|---|---|---|
| LA HAYE | 22 juin 1999 | Devisme, F |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

........................................................................
& : membre de la même famille, document correspondant

EPO FORM 1503 03 82 (P04C02)

18

**ANNEXE AU RAPPORT DE RECHERCHE EUROPEENNE
RELATIF A LA DEMANDE DE BREVET EUROPEEN NO.**

EP 99 40 1061

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

22-06-1999

| Document brevet cité au rapport de recherche | | | Date de publication | Membre(s) de la famille de brevet(s) | | | Date de publication |
|---|---|---|---|---|---|---|---|
| FR | 2758278 | A | 17-07-1998 | EP | 0855216 | A | 29-07-1998 |
| | | | | JP | 10211432 | A | 11-08-1998 |
| GB | 2063699 | A | 10-06-1981 | JP | 1231420 | C | 26-09-1984 |
| | | | | JP | 56076246 | A | 23-06-1981 |
| | | | | JP | 59004182 | B | 28-01-1984 |
| | | | | CA | 1147715 | A | 07-06-1983 |
| | | | | DE | 3044071 | A | 01-10-1981 |
| | | | | FR | 2469954 | A | 29-05-1981 |
| | | | | MX | 172428 | B | 16-12-1993 |
| | | | | NL | 8006444 | A,C | 01-07-1981 |
| | | | | US | 4367165 | A | 04-01-1983 |
| | | | | US | 4439312 | A | 27-03-1984 |
| EP | 908233 | A | 14-04-1999 | FR | 2769520 | A | 16-04-1999 |
| | | | | FR | 2769611 | A | 16-04-1999 |
| EP | 792686 | A | 03-09-1997 | FR | 2745203 | A | 29-08-1997 |
| FR | 2571982 | A | 25-04-1986 | CA | 1256842 | A | 04-07-1989 |
| | | | | CN | 1003772 | B | 05-04-1989 |
| | | | | DE | 3562985 | A | 07-07-1988 |
| | | | | EP | 0180513 | A | 07-05-1986 |
| | | | | JP | 61103546 | A | 22-05-1986 |
| FR | 2194767 | A | 01-03-1974 | AT | 326254 | B | 10-12-1975 |
| | | | | AT | 678273 | A | 15-02-1975 |
| | | | | AU | 474479 | B | 22-07-1976 |
| | | | | AU | 5885173 | A | 06-02-1975 |
| | | | | BE | 802800 | A | 28-01-1974 |
| | | | | CA | 967901 | A | 20-05-1975 |
| | | | | DE | 2339278 | A | 14-02-1974 |
| | | | | DK | 142328 | B | 13-10-1980 |
| | | | | GB | 1440230 | A | 23-06-1976 |
| | | | | JP | 1149503 | C | 14-06-1983 |
| | | | | JP | 49059802 | A | 11-06-1974 |
| | | | | JP | 57003716 | B | 22-01-1982 |
| | | | | NL | 7310691 | A | 06-02-1974 |
| | | | | SE | 396613 | B | 26-09-1977 |
| | | | | ZA | 7305265 | A | 31-07-1974 |
| US | 5405996 | A | 11-04-1995 | AT | 169612 | T | 15-08-1998 |
| | | | | AU | 673905 | B | 28-11-1996 |
| | | | | AU | 6292994 | A | 24-10-1994 |
| | | | | BG | 100045 | A | 31-05-1996 |
| | | | | BR | 9406104 | A | 12-12-1995 |

EPO FORM P0460

**ANNEXE AU RAPPORT DE RECHERCHE EUROPEENNE
RELATIF A LA DEMANDE DE BREVET EUROPEEN NO.**  EP 99 40 1061

La présente annexe indique les membres de la famille de brevets relatifs aux documents brevets cités dans le rapport de
recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

22-06-1999

| Document brevet cité au rapport de recherche | Date de publication | Membre(s) de la famille de brevet(s) | | Date de publication |
|---|---|---|---|---|
| US 5405996 A | | CA | 2159486 A | 13-10-1994 |
| | | CN | 1122131 A | 08-05-1996 |
| | | CZ | 9502572 A | 15-05-1996 |
| | | DE | 69412326 D | 17-09-1998 |
| | | DE | 69412326 T | 29-04-1999 |
| | | EP | 0620205 A | 19-10-1994 |
| | | ES | 2119002 T | 01-10-1998 |
| | | FI | 954739 A | 05-12-1995 |
| | | HU | 73744 A | 30-09-1996 |
| | | JP | 2770734 B | 02-07-1998 |
| | | JP | 7089896 A | 04-04-1995 |
| | | WO | 9422803 A | 13-10-1994 |
| | | NO | 953970 A | 05-12-1995 |
| | | PL | 311003 A | 22-01-1996 |
| | | SG | 43820 A | 14-11-1997 |
| | | SK | 125095 A | 03-04-1996 |
| US 3716475 A | 13-02-1973 | AUCUN | | |
| EP 537064 A | 14-04-1993 | FR | 2682371 A | 16-04-1993 |
| | | DE | 69210936 D | 27-06-1996 |
| | | DE | 69210936 T | 19-09-1996 |

EPO FORM P0460

Pour tout renseignement concernant cette annexe : voir Journal Officiel de l'Office européen des brevets, No.12/82